# EUROPÄISCHE PATENTSCHRIFT

(11) **EP 1 028 036 B1**
(45) Veröffentlichungstag und Bekanntmachung des Hinweises auf die Patenterteilung: **06.04.2005**
(21) Anmeldenummer: 00102178.1
(22) Anmeldetag: 09.02.2000
(51) Int. Cl.: B60R 21/26, B60R 21/20

(54) **Airbag-Treibsatz**
Airbag propellant
Charge pyrotechnique pour coussin gonflable

(30) Priorität: 09.02.1999 DE 29902273 U
(43) Veröffentlichungstag der Anmeldung: 16.08.2000
(73) Patentinhaber: TRW Automotive Safety Systems GmbH, 63743 Aschaffenburg (DE)
(72) Erfinder: Lorenz, Christian, 63849 Leidersbach (DE)
(74) Vertreter: Degwert, Hartmut, Dipl.-Phys.

(56) Entgegenhaltungen:
- EP-A- 0 820 906
- DE-A- 4 116 882
- US-A- 3 724 870
- US-A- 3 944 251
- US-A- 5 066 039
- US-A- 5 275 433
- US-A- 5 658 010

## Beschreibung

Die Erfindung betrifft ein Rückhaltesystem gemäß dem Oberbegriff des Anspruchs 1.

Gassäcke bzw. Airbags sind serienmäßig zuerst in Kraftfahrzeuglenkrädern angeordnet worden. Später kamen die sogenannten Beifahrerairbags hinzu. Inzwischen werden bei einer Reihe von Fahrzeugtypen bereits Seitenairbags serienmäßig vorgesehen. Weitere Airbags für bestimmte Aufprallbereiche bzw. Aufprallsituationen befinden sich in der Entwicklung, werden vielfach aber auch als Sonderausstattung oder sogar als Serienausstattung von den Automobilherstellern angeboten.

Bei den am weitesten entwickelten Lenkrad-Airbagmodulen ist der Treibsatz in einem zylindrischen Gehäuse mit Austrittsöffnungen untergebracht, wobei im Hinblick auf eine rationelle Herstellung sowie die im Umgang mit pyrotechnischem Material zu beachtenden Sicherheitsbestimmungen nur wenige, nicht sehr unterschiedliche Gehäuseformen entwickelt worden sind. Daraus folgt, daß die äußere Form der Airbagmodule und der dafür bereitzustellende Montageraum weitgehend von der Form des Gehäuses für den pyrotechnischen Treibsatz bestimmt wird. Im Allgemeinen wird daher ein Lenkrad konstruktiv völlig neu konzipiert, wenn es für die Unterbringung eines Airbagmoduls ausgebildet wird. Das Gleiche gilt selbstverständlich für alle anderen Einbauorte in Kraftfahrzeugkarosserien, die für den Einbau eines Airbagmoduls alle mehr oder weniger umgestaltet werden müssen. Die damit verbundenen erheblichen Zusatzkosten stehen der wünschenswerten weiteren Verbesserung der passiven Sicherheit in Kraftfahrzeugen entgegen.

In der US-A-5 275 433 wird vorgeschlagen, gaserzeugendes Material mit einer flexiblen, druckfesten Hülle zu umschließen, die mit vorbestimmten Öffnungszonen versehen ist. Bei der Aktivierung des Gasgenerators tritt das Gas durch die Öffnungszonen über eine Filtereinrichtung und eine weitere, die druckfeste Hülle umgebende Niederdruckhülle in einen Gassack ein.

Die DE-A-41 16 882 beschreibt einen Gassack, in dessen Inneren ein Gasgenerator eingesetzt ist, bei dem flexible Folien aus gaserzeugendem Material von Siebgewebe aus Metall bzw. Glasfasern umhüllt sind. Die Gewebelagen trennen das gaserzeugende Material vom Gassack. Es können mehrere derartige Module in einem Gassack angeordnet sein.

In der gattungsgemäßen US-A-3 724 870 ist eine Gasgenerator-Anordnung mit mehreren Gaserzeugern gezeigt. Der Treibsatz jedes Gaserzeugers kann als einzelner Formkörper vorliegen, der zum Gassack hin eine freiliegende Oberfläche aufweist.

Der Erfindung liegt die Aufgabe zugrunde, die mit den üblichen Gehäuseformen für pyrotechnische Treibsätze verbundenen Nachteile zu überwinden und die Airbagmodule für Kraftfahrzeuge von den sich daraus ergebenden konstruktiven Zwängen zu befreien, damit Airbagmodule freizügiger gestaltet und an vorhandene Einbauräume leichter angepaßt werden können.

Zur Lösung dieser Aufgabe werden die Merkmale des Anspruchs 1 vorgeschlagen. Wenn der pyrotechnische Treibsatz zur Erzeugung von Füllgasen für das rasche Aufblasen eines Gassacks erfindungsgemäß als starrer oder knetbarer Formkörper ausgestaltet ist, kann er wesentlich leichter an vorhandene Einbauräume angepaßt bzw. in diese eingedrückt werden, was sich generell dahingehend auswirkt, daß die vorhandene Einbauumgebung nicht oder nur wenig verändert werden muß und daß das Airbagmodul in der Regel weniger Einbauraum erfordert, weil sonst nicht genutzte Toträume ganz oder teilweise mitbenutzt werden können. Außerdem entfällt das meist aus Stahl bestehende Gehäuse, wodurch das Airbagmodul wesentlich leichter wird.

In die erfindungsgemäßen Formkörper läßt sich leicht die erforderliche Zündeinrichtung integrieren.

Ein weiterer Vorteil des Erfindungsgedankens besteht darin, daß die Masse des Treibmittels leicht auf zwei oder mehr Formkörper aufgeteilt werden kann, denen jeweils wenigstens eine Zündeinrichtung zugeordnet wird. Auf diese Weise erhält man die Möglichkeit, Einfluß auf das Abbrennverhalten zu nehmen und das Aufblasen des Gassacks zu steuern.

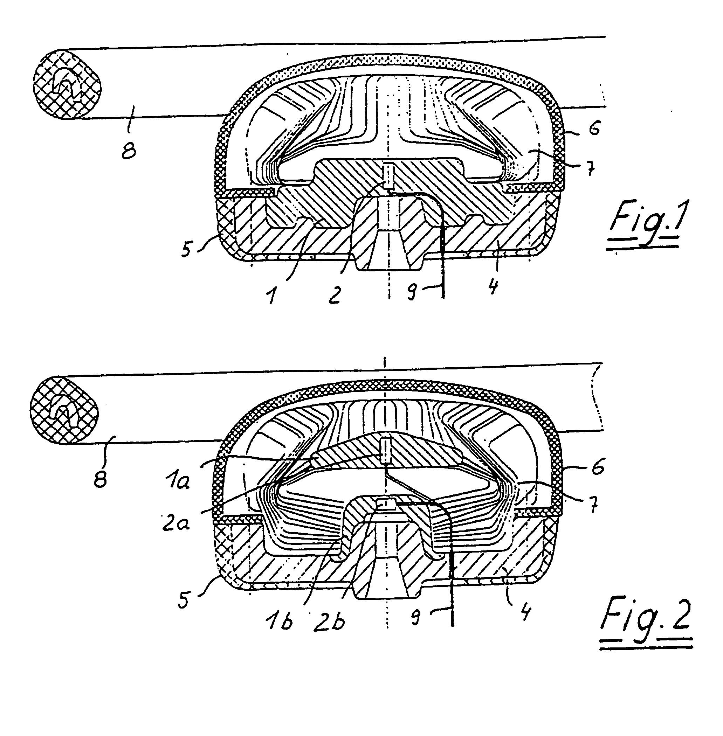

Weitere Einzelheiten und Vorteile werden anhand der in den Figuren 1 und 2 dargestellten Ausführungsbeispiele näher erläutert. Es zeigen:
- Figur 1 eine erste Ausführungsform des Erfindungsgedanken für ein Lenkrad-Airbag
- Figur 2 eine zweite Form des Erfindungsgedanken.

In Figur 1 ist der Teilschnitt eines Lenkrades dargestellt, bei dem ein Nabenbereich 4 von einer Ummantelung 5 umgeben ist und zusammen mit einer Abdeckkappe 6 den Aufnahmeraum für den zusammengefalteten Gassack 7 und den Treibsatz bildet. Dabei ist die gesamte Masse des pyrotechnischen Treibmittels unter Verwendung eines geeigneten Bindemittels zu einem Formkörper 1 zusammengefaßt, dessen Abmessungen auf einen verfügbaren Einbauraum abgestimmt sind. Im vorliegenden Fall ergibt sich der Einbauraum aus der Schnittdarstellung des Formkörpers 1, der in der Draufsicht rotationssymmetrisch, quadratisch, rechteckig oder anderweitig gestaltet sein kann. Der dargestellte Einbauraum ist nur als Beispiel aufzufassen, wobei es ohne weiteres ersichtlich ist, daß der Formkörper 1 auch einfacher oder komplizierter geformt sein kann.

Mit 8 ist ein Teil des Lenkradkranzes und mit 9 das Kabel für die Zündeinrichtung 2 bezeichnet.

Die Ausführungsform gemäß Figur 2 unterscheidet sich von derjenigen gemäß Figur 1 nur dadurch, daß zwei Formkörper 1a und 1b mit jeweils einer Zündeinrichtung 2a und 2b vorgesehen sind. Auch für diese Formkörper gilt, daß sie leicht an verfügbare Einbauräume anpaßbar bzw. in diese eindrückbar sind. Die Verwendung mehrerer Formkörper hat - wie bereits gesagt - den Vorteil, daß man eine zusätzliche Möglichkeit hat, das Zündverhalten zu beeinflussen und das Aufblasen des Gassacks zu steuern.

## Patentansprüche

1. Rückhaltesystem mit einem pyrotechnischen Treibsatz zur Erzeugung von Füllgasen für das rasche Aufblasen eines Gassacks, der raumsparend zusammengelegt in einem Kraftfahrzeug angeordnet ist und als Aufprallschutz für die Insassen bei unfallbedingten Fahrzeugverzögerungen dient,
wobei der pyrotechnische Treibsatz eine Masse eines pyrotechnischen Treibmittels enthält,
**dadurch gekennzeichnet, daß** die Masse unter Verwendung eines Bindemittels zu einem einteiligen, starren Formkörper, der an einen vorhandenen Einbauraum angepaßt ist, oder zu einem knetbaren Formkörper (1; 1a, 1b), der in einen vorgegebenen Einbauraum eindrückbar ist, zusammengefaßt ist, so daß eine vorhandene Einbauumgebung nicht oder nur sehr wenig verändert werden muß, und wobei
der Formkörper eine zum Inneren des Gassacks (7) hin freiliegende Oberfläche aufweist.

2. Rückhaltesystem nach einem der vorhergehenden Ansprüche, **dadurch gekennzeichnet, daß** wenigstens zwei getrennte Formkörper (1a, 1b) vorgesehen sind, die beide eine unmittelbar zum Inneren des Gassacks (7) hin freiliegende Oberfläche aufweisen.

3. Rückhaltesystem nach einem der vorstehenden Ansprüche, **dadurch gekennzeichnet, daß** in der Masse des Treibmittels wenigstens eine Zündeinrichtung (2; 2a, 2b) integriert ist.

## Claims

1. A restraint system comprising a pyrotechnical propellant charge for generating filling gases for rapidly inflating a gas bag arranged space-savingly folded in a motor vehicle and serving as an impact protection for the occupants in the event of accident-induced vehicle decelerations,
the pyrotechnical propellant charge including a mass of a pyrotechnical propellant,
**characterized in that**, using a binding agent, the mass is conglomareated into a one-piece, rigid shaped body adapted to an available installation space or into a kneadable shaped body (1; 1a, 1b) capable of being pressed into a predefined installation space, so that available installation surroundings need to be altered or need to be altered only very little, and
the shaped body having a surface that is exposed towards the interior of the gas bag (7).

2. The restraint system as set forth in the preceding claim, **characterized in that** at least two separate shaped bodies (1a, 1b) are provided, each of which has a surface that is exposed directly towards the interior of the gas bag (7).

3. The restraint system as set forth in any of the preceding claims, **characterized in that** at least one ignition device (2; 2a, 2b) is integrated in the mass of the propellant.

## Revendications

1. Système de retenue comportant une charge pyrotechnique pour engendrer des gaz de remplissage pour le gonflage rapide d'un coussin à gaz qui est agencé dans un véhicule automobile en étant plié de manière peu encombrante et qui sert de protection contre les chocs pour les occupants en cas de ralentissement du véhicule dû à un accident,
la charge pyrotechnique contenant une masse d'un agent propulseur pyrotechnique,
**caractérisé en ce que** la masse est conglomérée en utilisant un liant pour former un corps façonné rigide et d'un seul tenant, qui est adapté à un espace de montage disponible, ou un corps façonné pétrissable (1 ; 1a, 1b), qui peut être pressé dans un espace de montage prédéterminé, de sorte qu'un environnement ne montage ne doit pas être modifié ou que très peu, et
le corps façonné présentant une surface exposée vers l'intérieur du coussin à gaz (7).

2. Système de retenue selon la revendication précédente, **caractérisé en ce qu'**il est prévu au moins deux corps façonnés (1a, 1b) séparés qui présentent tous les deux une surface directement exposée vers l'intérieur du coussin à gaz (7).

3. Système de retenue selon l'une des revendications précédentes, **caractérisé en ce que** dans la masse de l'agent propulseur est intégré au moins un dispositif d'allumage (2 ; 2a, 2b).
